# EUROPÄISCHE PATENTSCHRIFT

(11) **EP 1 881 913 B1**
(45) Veröffentlichungstag und Bekanntmachung des Hinweises auf die Patenterteilung: **11.08.2010**
(21) Anmeldenummer: 06742326.9
(22) Anmeldetag: 05.05.2006
(51) Int. Cl.: B60N 2/66

(54) **LORDOSENVERSTELLER FÜR EINEN KRAFTFAHRZEUGSITZ**
LUMBAR SUPPORT FOR A MOTOR VEHICLE SEAT
DISPOSITIF DE REGLAGE LOMBAIRE POUR UN SIEGE DE VEHICULE AUTOMOBILE

(30) Priorität: 12.05.2005 DE 202005007802 U; 10.08.2005 DE 102005037682; 09.12.2005 DE 102005058904
(43) Veröffentlichungstag der Anmeldung: 30.01.2008
(73) Patentinhaber: Brose Fahrzeugteile GmbH & Co. KG, Coburg, 96450 Coburg (DE)
(72) Erfinder: NEUMANN, Guido, 98693 Ilmenau (DE); STEFFEN, Oliver, 96450 Coburg (DE)
(74) Vertreter: Baumgärtel, Gunnar
(86) Internationale Anmeldenummer: PCT/DE2006/000818
(87) Internationale Veröffentlichungsnummer: WO 2006/119754

(56) Entgegenhaltungen:
- WO-A-2004/065162
- WO-A-2005/023585
- US-A- 5 553 919
- US-A1- 2004 108 760

## Beschreibung

Die Erfindung betrifft einen Lordosenversteller für einen Kraftfahrzeugsitz nach dem Oberbegriff des Anspruchs 1.

Eine bekannte Rückenlehnenstruktur umfasst ein Lehnengestell, welches eine dem Rücken des Sitzbenutzers zugewandte Vorderseite aufweist, entlang der sich die Wirbelsäule des Sitzbenutzers bei bestimmungsgemäßem Gebrauch des Sitzes in Lehnenlängsrichtung erstreckt; eine an der Vorderseite des Lehnengestells angeordnete Lordosenstütze zum Abstützen des Rückens eines Sitzbenutzers; sowie eine Verstelleinrichtung zur Einstellung der Lage der Lordosenstütze senkrecht zur Erstreckungsebene des Lehnengestells, um die Wölbung eines Lehnenpolsters zu verstellen, das vor dem Lehnengestell und der Lordosenstütze angeordnet ist und über das sich der Rücken eines Fahrzeuginsassen an der Lordosenstütze abstützt.

Die DE 203 13 925 U1 beschreibt eine Lordosenverstelleinrichtung, bei der ein flacher Aufbau der Verstelleinrichtung der Lordosenstütze dadurch entsteht, wenn zur Einstellung der Lage der Lordosenstütze senkrecht zur Erstreckungsebene des Lehnengestells ein Gleiter verwendet wird, der sich im Wesentlichen entlang der Erstreckungsebene des Lehnengestells oder leicht schräg hierzu bewegt und hierbei über eine Rampe so mit einem als Bügel ausgebildeten Verstellelement zusammenwirkt, so dass dessen Lage (zusammen mit der Lordosenstütze selbst) quer zur Bewegungsrichtung des Gleiters verstellt wird.

In der WO 2004/065162 A2 wird eine Lordosenverstelleinrichtung für einen Kraftfahrzeugsitz beschrieben, die einen einen Lordosenversteller tragenden Rahmen und zwei verschwenkbare Bügel aufweist, die sich nach Art einer Schere kreuzen.

Der Erfindung liegt die Aufgabe zugrunde, einen Lordosenversteller der eingangs genannten Art insbesondere in Richtung Bauraum und Bauteilaufwand zu verbessern.

Dieses Problem wird erfindungsgemäß durch die Schaffung eines Lordosenverstellers mit den Merkmalen des Anspruchs 1 gelöst. Demnach ist vorgesehen, dass der wenigstens eine Gleiter im Scherbereich der Bügel angeordnet ist, derart, dass sich der Gleiter zur Verstellung des einen Bügels auf dem anderen Bügel abstützt, und dass die Bügel als geformte Bereiche des die Lordosenverstellung bildenden Rahmens ausgebildet sind.

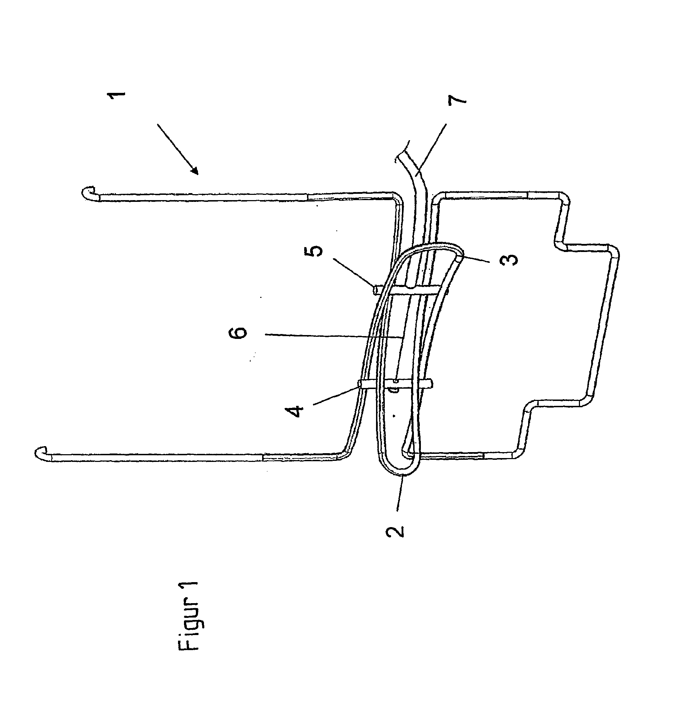

Verschiedene Ausführungsformen der Erfindung werden des weiteren an Hand der Figuren ertautert
Figur 1 zeigt den erfindungsgemäßen Lordosenversteller in perspektivischer Ansicht. Der den Versteller tragende Rahmen 1 ist aus Draht gefertigt. An zwei gegenüberliegenden Bereichen sind zwei sich kreuzende Bügel 2, 3 geformt, wobei ein Bügel 2 in den anderen Bügel 3 greift, also eine entsprechend kleinere Breite aufweist. In den sich kreuzenden Bereichen der Bügel 2, 3 ist je ein als zylindrischer Körper geformter Gleiter 4, 5 gelegt, welche über ein Seilzug-Bowdensystem 6, 7 gegeneinander bewegt werden. Jeder der Gleiter 4, 5 stützt sich auf dem jeweils anderen Bügel 2, 3 ab. Das Seil 6 ist direkt an dem einen Gleiter 4 angelenkt und durch den anderen Gleiter 5 hindurchgeführt. An diesem Gleiter 5 stützt sich das Bowdenrohr 7 ab. Das Seil 6 wird von einem nicht dargestellten Versteller motorisch oder von Hand gespannt. Zwischen den Gleitern 4, 5 kann eine Federelement angeordnet sein - durch die Kraft der auf die Bügel 2, 3 wirkende Bepolsterung (Lordosenmatte - nicht dargestellt) werden diese bereits auseinander gedrückt, so dass auf ein Federmittel auch verzichtet werden kann.

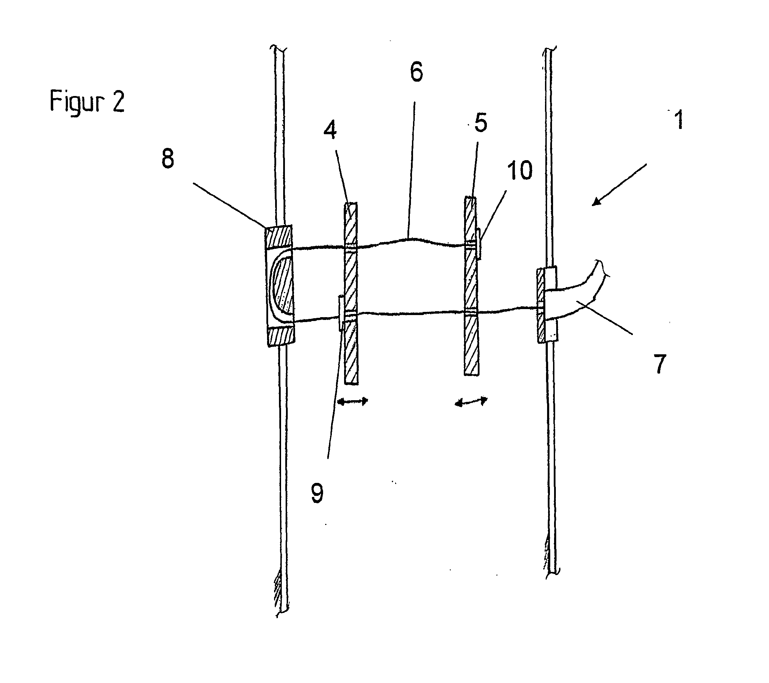

Figur 2 zeigt eine Seilverstellung, wobei das Bowdenrohr 7 an einer Seite des Rahmens 1 abgestützt ist und das Seil 6 an der anderen Seite des Rahmens 1 eine Umlenkung 8 aufweist. Das Seil 6 ist vor und nach der Umlenkung 8 durch beide Gleiter 4, 5 hindurchgeführt und nimmt den jeweiligen Gleiter 4, 5 über je einen Nippel 9,10 mit.

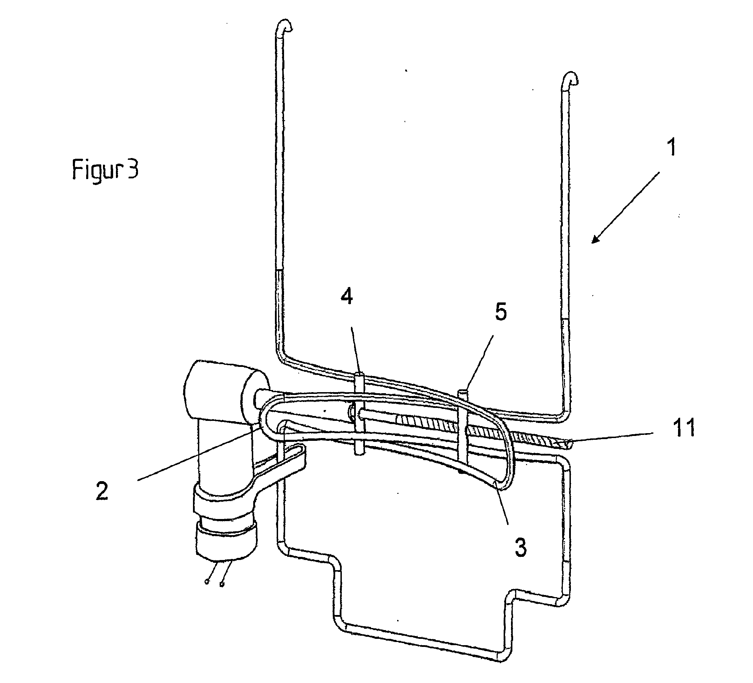

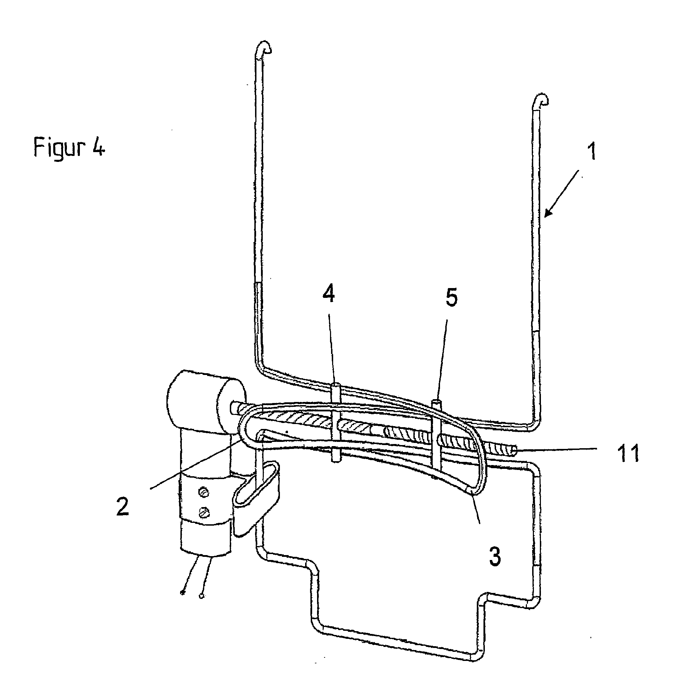

Die Figuren 3 und 4 beschreiben eine motorische Verstellung mit einer von einem Motor angetriebenen Spindel 11. Einer der Gleiter 4, 5 bzw. beide weisen eine Gewindemutter auf. Bei der Version nach Figur 3 stützt sich der Spindeltrieb an dem einen Gleiter 4 ab - der zweite Gleiter 5 weist die Spindelmutter auf. Bei Figur 4 besitzt die Spindel 11 einen Links-Rechts-Gewindeabschnitt - Die Gleiter 4, 5 jeweils eine Spindelmutter mit Links- bzw. Rechtsgewinde. Der Motor für den Spindelantrieb ist gelenkig am Rahmen 1 abgestützt.

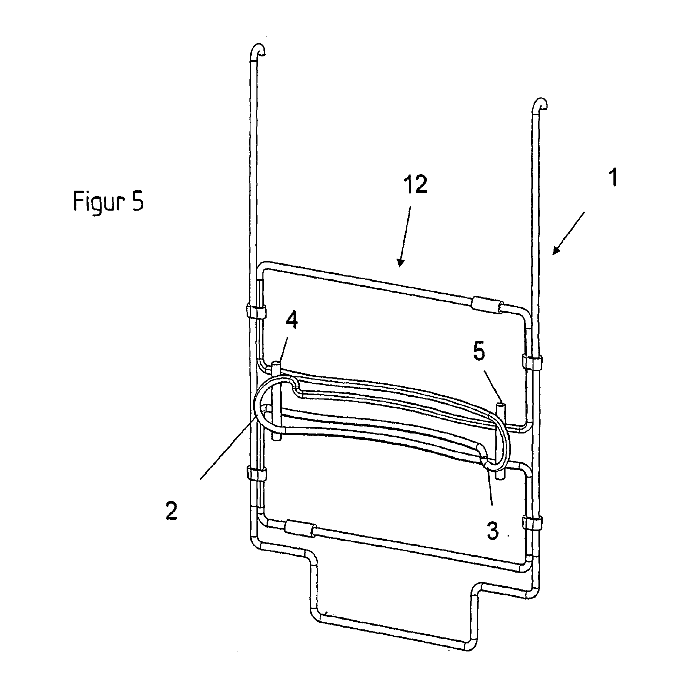

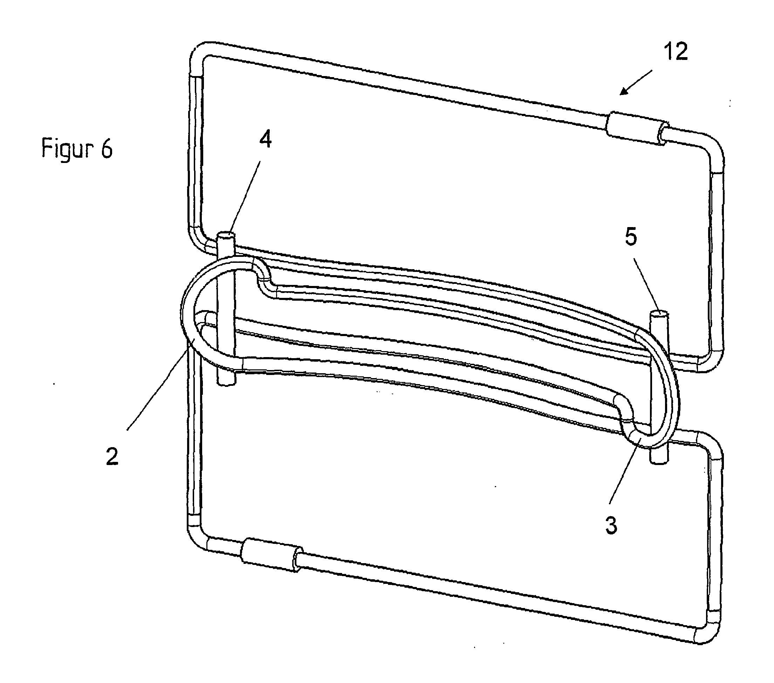

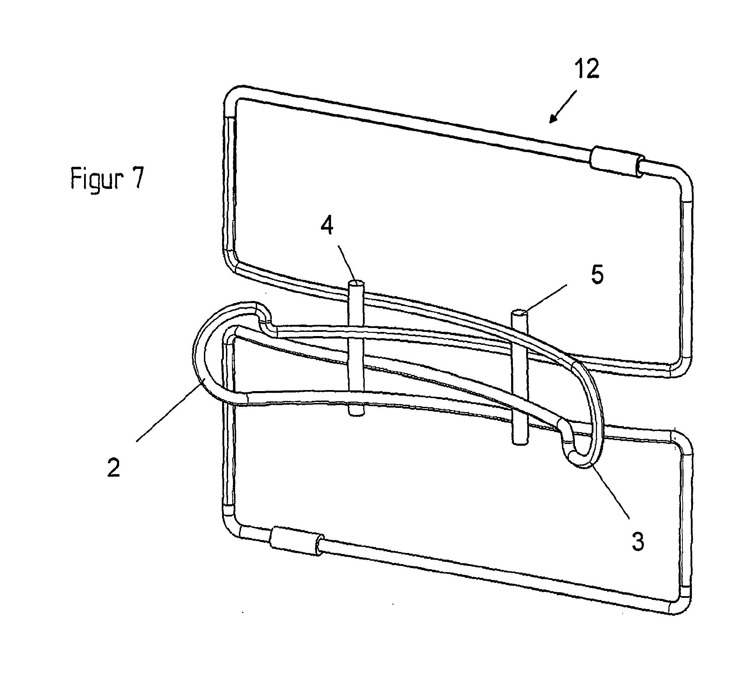

Die Figuren 5 - 7 stellen eine Ausführung dar, bei der die Bügel 2, 3 an einem aus zwei entsprechend geformten, symmetrischen Drahtteilen zusammengesetzten Rahmen 1 angebracht sind. Dieser Rahmen 12 ist dann in einen weiteren, in der nicht dargestellten Lehnenstruktur befindlichen Rahmen 1 eingehängt. Die Figuren 6 und 7 zeigen die Bügel 2, 3 in zwei verschiedenen Stellungen. Bei den hier dargestellten Ausführungsformen der Erfindung sind die Gelenke der Bügel 2, 3 als Biegegelenke ausgebildet.

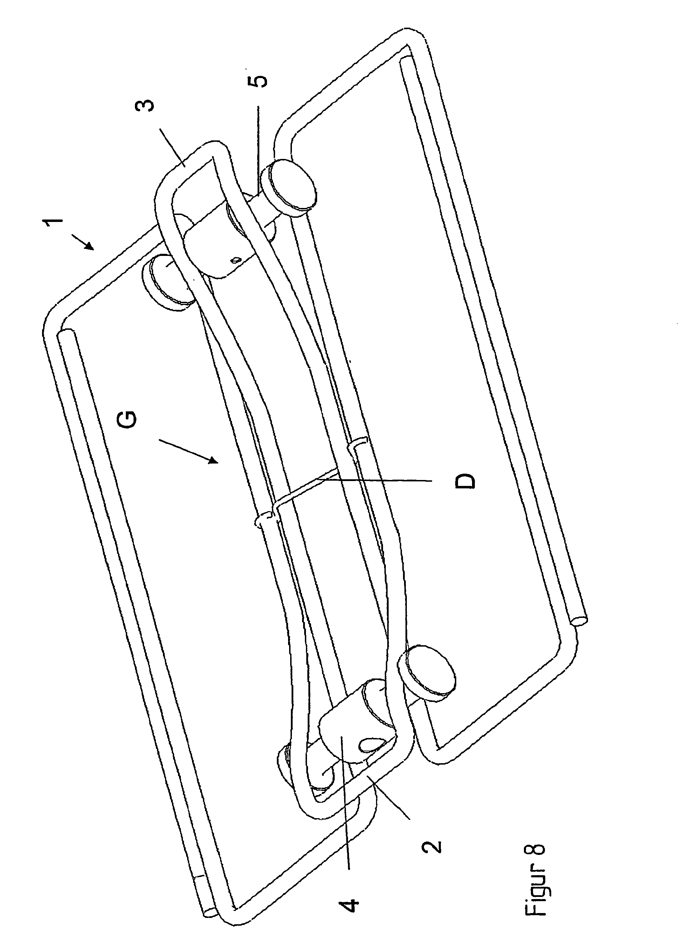

Die Figur 8 zeigt eine Ausführung der Erfindung, bei der die beiden Bügel 2, 3 durch ein Gelenk G miteinander gekoppelt sind. Das Gelenk ist hierbei durch eine Drahtverbindung D der beiden Bügel 2, 3 gebildet, derart, dass sich der eine Schenkel des Bügels 2 sich über die Drahtverbindung auf dem benachbarten Schenkel von Bügel 3 abstützt. Gegenüber stützt sich der Schenkel von Bügel 3 über die Drahtverbindung D auf dem Schenkel 2 ab. Hierdurch ergibt sich eine Zentrierung der über einen hier nicht dargestellten Seilzug bewegbaren Gleiter 4, 5. Beide Gleiter habe so stets den gleichen Abstand zu der Achse des Gelenkes G.

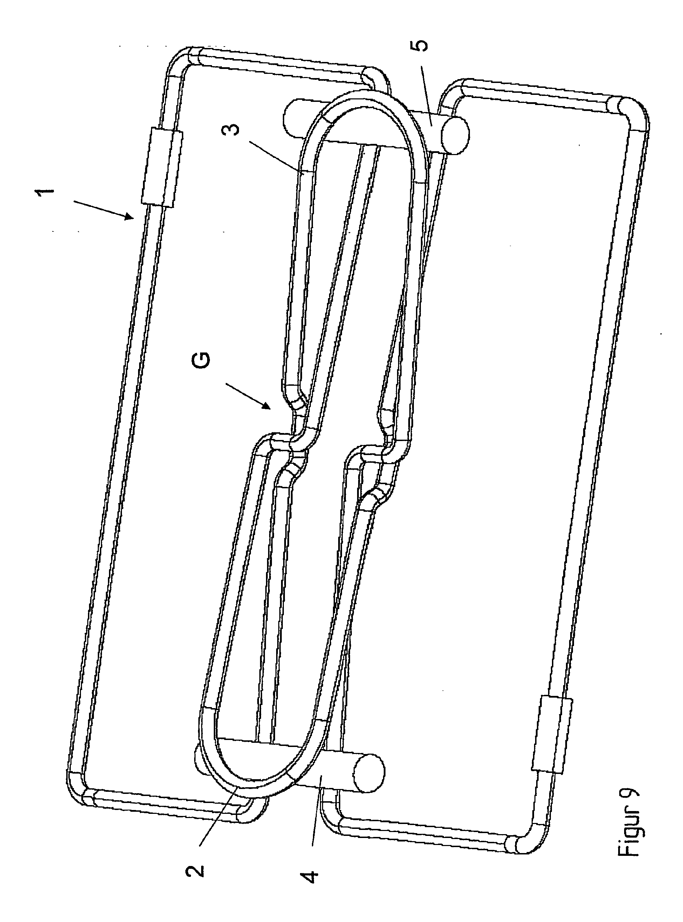

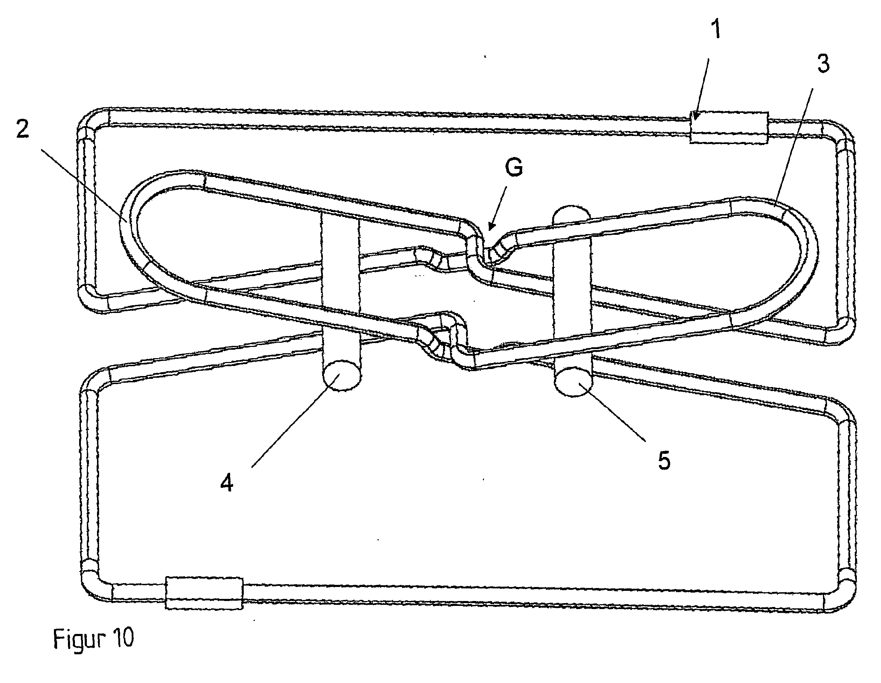

Figur 9 und 10 stellen eine Ausführungsform der Erfindung dar, bei der die Schenkel der beiden Bügel 2, 3 jeweils im mittleren Bereich derartig geformt sind, dass sie sich senkrecht umgreifen. Wie bei der zuvor beschriebenen Ausführung stützt sich so der eine Schenkel von Bügel 2 an dem ihn untergreifendem Schenkel von Bügel 3 ab. Auf der anderen Seite stützt sich der senkrecht zur Erstreckung des Bügels 3 verlaufende Bereich auf dem Schenkel von Bügel 2 ab. Das so gebildete Gelenk G arbeitet nach dem Prinzip eines Wälz-Wiegegelenkes. Figur 9 zeigt hierbei die flache Einstellung des Lordosenverstellers mit weit voneinander entfernten Gleitern 4, 5 - bei Figur 10 sind die Bügel stark verschränkt.

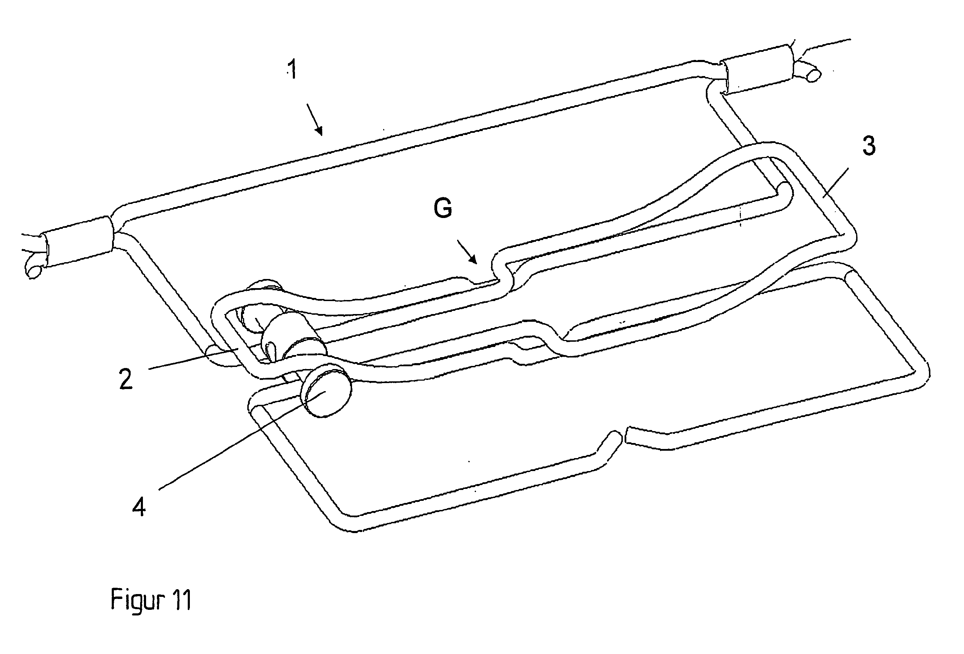

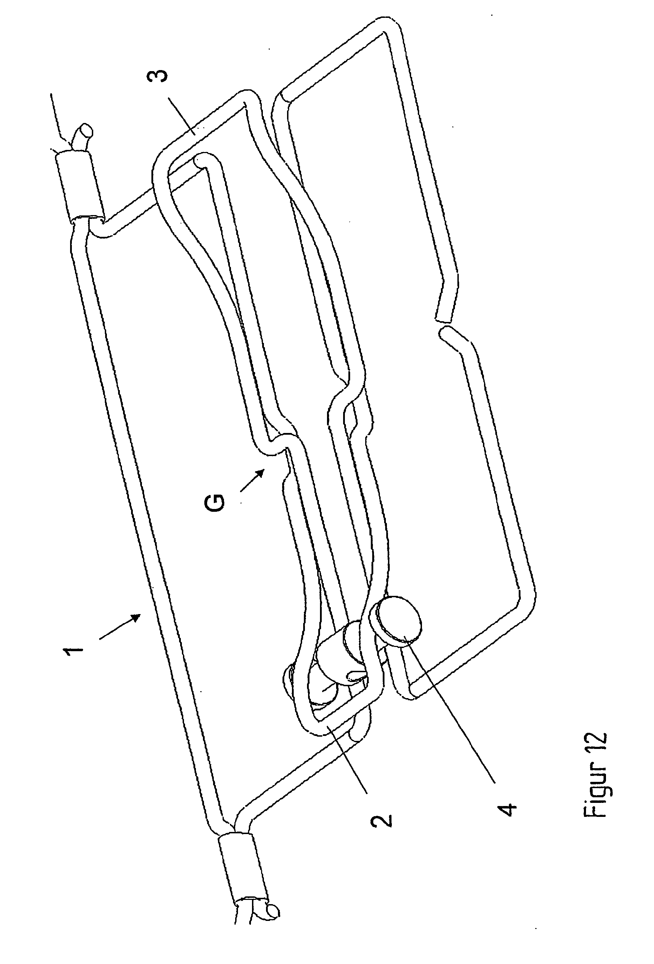

Bei der Ausführungsform der Erfindung nach Figur 11 und 12 ist nur ein Gleiter 4 zur Verschwenkung der beiden Bügel 2, 3 vorgesehen. Ähnlich wie zuvor beschrieben, sind die Bügel 2, 3 nach Art eines Wälz-Wiegegelenkes G sich gegenseitig aufeinander abstützend miteinander gekoppelt. Der eine Gleiter 2 ist über ein nicht dargestelltes Seil in Richtung Gelenk bewegbar, wobei sich in Folge dieser Bewegung und der Koppelung über das Gelenk G die beiden Bügel 2, 3 verschwenken. In Figur 12 ist der Gleiter 4 in Richtung Gelenk G gezogen. Das das Seil umgebende Bowdenrohr stützt sich dabei an dem Rahmen 1 des Lordosenverstellers ab. Alternativ hierzu kann der Gleiter 4 auch über eine antreibbare Spindel bewegt werden. Der Antrieb der Spindel ist dann ebenfalls am Rahmen 1 des Lordosenverstellers abgestützt. Die Betätigung des nicht dargestellten Seiles bzw. der nicht dargestellten Spindel kann manuell oder motorisch erfolgen.

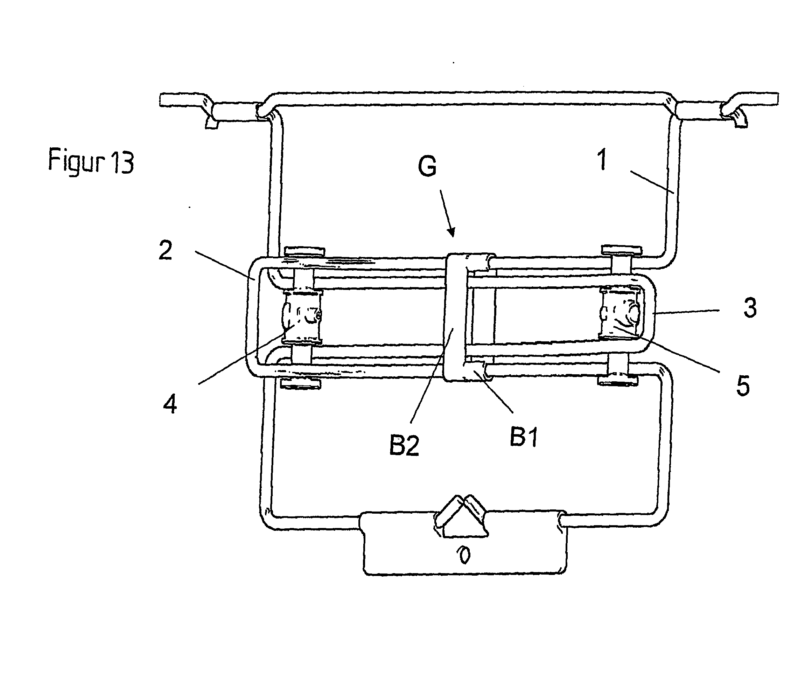

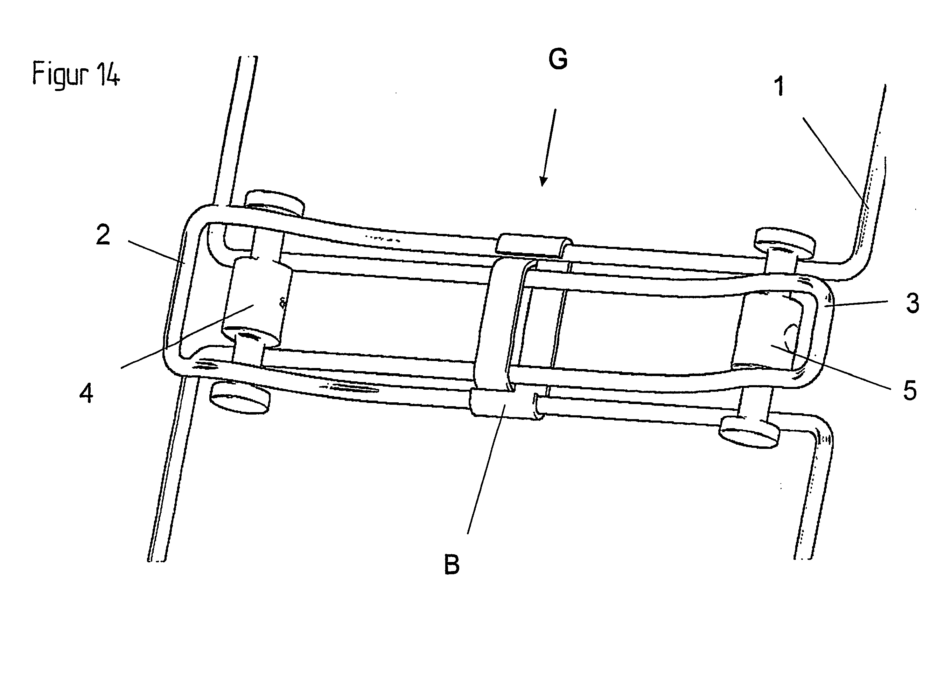

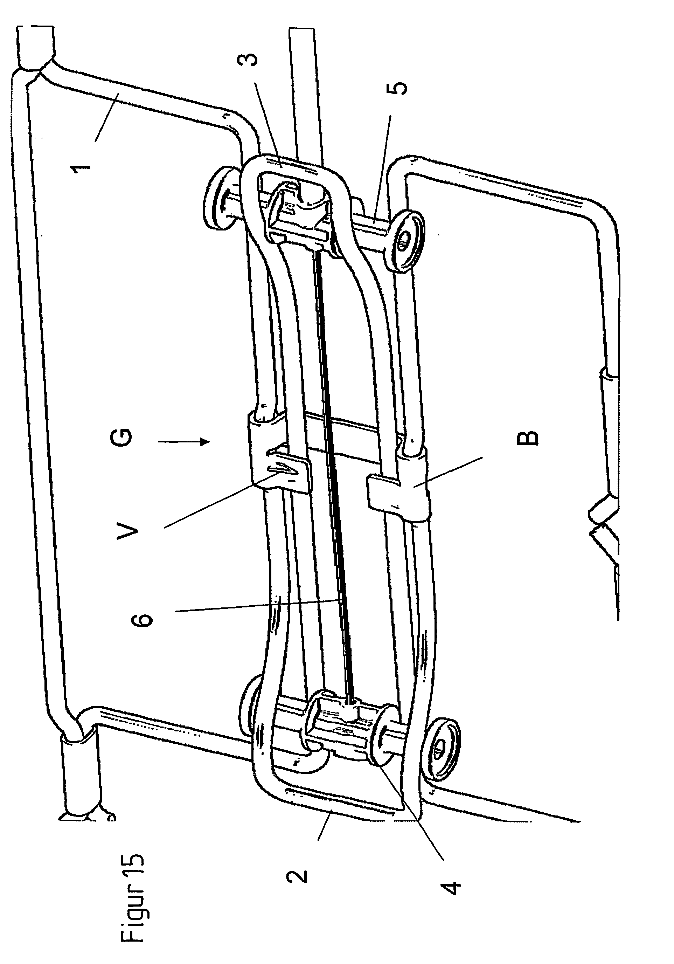

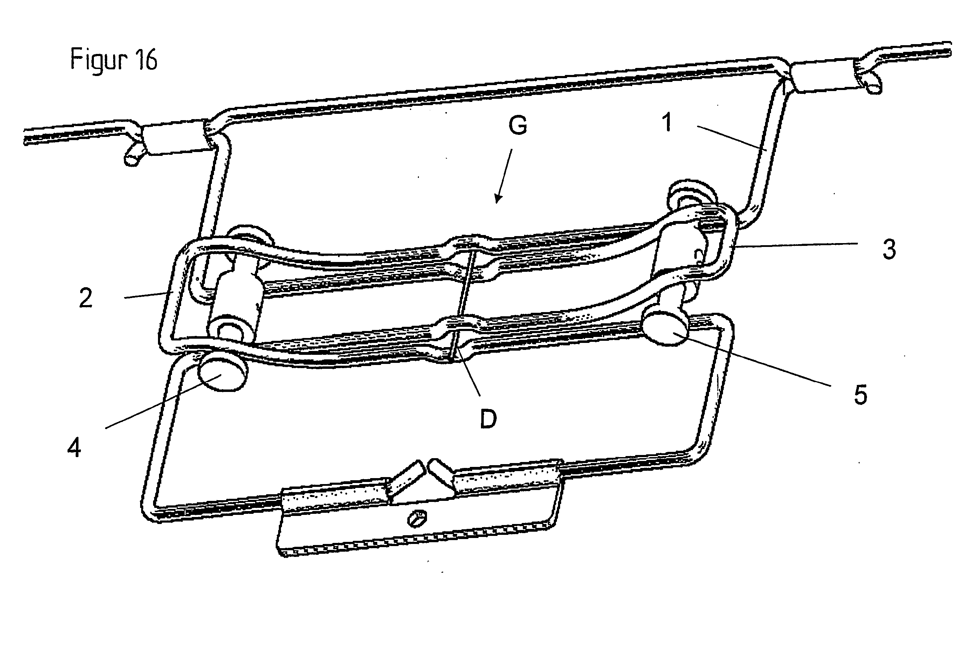

Die Versionen nach den Figuren 13 - 16 zeigen weitere Ausgestaltungen des Gelenkes G. Hiernach sind zwei Blechteile B1, B2 (Figur 13) bzw. ein zwei Laschen aufweisendes Blechteil B (Figur 14) vorgesehen. Figur 15 sieht ein Blechteil mit einer unteren durchgehenden Lasche und zwei oberen Stegen, wobei diese zur Versteifung je eine Versteifungsrippe V aufweisen. Bei Figur 16 ist als Gelenk G ein Drahtstift D vorgesehen.

## Patentansprüche

1. Lordosenversteller für einen Kraftfahrzeugsitz mit
- einem den Lordosenversteller tragenden Rahmen (1), und
- zwei verschwenkbaren, sich nach Art einer Schere kreuzenden Bügeln (2, 3), wobei wenigstens einem Bügel (2, 3) ein linear bewegbarer Gleiter (4, 5) zur Verschwenkung zugeordnet ist,
**dadurch gekennzeichnet,**
**dass** ein Gleiter (4, 5) im Scherbereich der Bügel (2, 3) angeordnet ist und dass die Bügel (2, 3) als geformte Bereiche des die Lordosenverstellung bildenden Rahmens (1) ausgebildet sind.

2. Lordosenversteller nach Anspruch 1, **dadurch gekennzeichnet, dass** die beiden Bügel (2, 3) durch ein Gelenk (G) gekoppelt sind.

3. Lordosenversteller nach Anspruch 1 und 2, **dadurch gekennzeichnet, dass** einem der Bügel (2) ein sich auf dem anderen Bügel (3) abstützender Gleiter (4) zugeordnet ist.

4. Lordosenversteller nach Anspruch 1 oder 2, **dadurch gekennzeichnet, dass** jedem der Bügel (2, 3) ein Gleiter (4, 5) zugeordnet ist.

5. Lordosenversteller nach einem der vorhergehenden Ansprüche, **dadurch gekennzeichnet, dass** der oder die Gleiter (4, 5) über einen manuellen Antrieb bewegbar sind.

6. Lordosenversteller nach einem der Ansprüche 1 - 4, **dadurch gekennzeichnet, dass** der oder die Gleiter (4, 5) über einen motorischen Antrieb bewegbar sind.

7. Lordosenversteller nach Anspruch 5 oder 6, **dadurch gekennzeichnet, dass** der oder die Gleiter (4, 5) über eine antreibbare Spindel (11) bewegbar sind.

8. Lordosenversteller nach Anspruch 5 oder 6, **dadurch gekennzeichnet, dass** der oder die Gleiter (4, 5) über einen Seilzug (6, 7) bewegbar sind.

9. Lordosenversteller nach Anspruch 8, **dadurch gekennzeichnet, dass** einer der Gleiter (4, 5) über ein angelenktes Seil (6), der andere Gleiter (4, 5) über ein das Seil (6) aufnehmendes Bowdenrohr (7) bewegbar ist.

10. Lordosenversteller nach Anspruch 8, **dadurch gekennzeichnet, dass** das die Gleiter (4, 5) bewegende Seil (6) zwischen zwei Rahmenteilen geführt ist und für jeden der Gleiter (4, 5) einen Mitnehmer (9, 10) aufweist.

11. Lordosenversteller nach Anspruch 3 und 8, **dadurch gekennzeichnet, dass** der eine Gleiter (4) über ein angelenktes Seil (6) bewegbar ist und das Bowdenrohr (7) sich am Rahmen (1) abstützt.

12. Lordosenversteller nach Anspruch 7, **dadurch gekennzeichnet, dass** der Rahmen (1) zweiteilig ausgebildet ist und jeder Rahmenteil einen Bügel (2, 3) aufweist.

13. Lordosenversteller nach Anspruch 7 oder 8, **dadurch gekennzeichnet, dass** der Rahmen (1) aus Draht gefertigt ist.

14. Lordosenversteller nach einem der vorhergehenden Ansprüche, **dadurch gekennzeichnet, dass** die Gleiter (4, 5) als zylinderförmige Elemente ausgebildet sind.

15. Lordosenversteller wenigstens nach Anspruch 2, **dadurch gekennzeichnet, dass** das Gelenk (G) durch eine die Bügel (2, 3) koppelnde Achse gebildet ist.

16. Lordosenversteller nach Anspruch 15, **dadurch gekennzeichnet, dass** die Achse die beiden Bügel (2, 3) durchgreift.

17. Lordosenversteller wenigstens nach Anspruch 2, **dadurch gekennzeichnet, dass** das Gelenk (G) als ein die beiden Bügel (2, 3) verbindendes Drahtelement ausgebildet ist.

18. Lordosenversteller wenigstens nach Anspruch 2, **dadurch gekennzeichnet, dass** das Gelenk (G) **dadurch** gebildet ist, indem sich die beiden Bügel (2, 3) gegenseitig aufeinander abstützen.

19. Lordosenversteller nach Anspruch 17, **dadurch gekennzeichnet, dass** das Gelenk (G) nach Art eines Wälz-Wiegegelenkes ausgebildet ist.

20. Lordosenversteller nach Anspruch 18 und 19, **dadurch gekennzeichnet, dass** das Gelenk (G) durch speziell geformte und sich umgreifende Bereiche der Bügel (2, 3) gebildet ist.

## Claims

1. A lumbar adjuster for a motor vehicle seat, with
- a frame (1) which supports the lumbar adjuster, and
- two pivotable bows (2, 3) which intersect in the manner of a pair of scissors, wherein at least one bow (2, 3) is assigned a linearly movable slide (4, 5) for pivoting it,
**characterized**
**in that** a slide (4, 5) is arranged in the scissor region of the bows (2, 3) and in that the bows (2, 3) are designed as shaped regions of the frame (1) which forms the lumbar adjustment.

2. The lumbar adjuster as claimed in claim 1, **characterized in that** the two bows (2, 3) are coupled by a joint (G).

3. The lumbar adjuster as claimed in claims 1 and 2, **characterized in that** one of the bows (2) is assigned a slide (4) which is supported on the other bow (3).

4. The lumbar adjuster as claimed in claim 1 or 2, **characterized in that** each of the bows (2, 3) is assigned a slide (4, 5).

5. The lumbar adjuster as claimed in one of the preceding claims, **characterized in that** the slide or the slides (4, 5) can be moved via a manual drive.

6. The lumbar adjuster as claimed in one of claims 1-4, **characterized in that** the slide or the slides (4, 5) can be moved via a motor drive.

7. The lumbar adjuster as claimed in claim 5 or 6, **characterized in that** the slide or the slides (4, 5) can be moved via a drivable spindle (11).

8. The lumbar adjuster as claimed in claim 5 or 6, **characterized in that** the slide or the slides (4, 5) can be moved via a cable pull (6, 7).

9. The lumbar adjuster as claimed in claim 8, **characterized in that** one of the slides (4, 5) can be moved via a cable (6) coupled to it, and the other slide (4, 5) can be moved via a Bowden tube (7) which accommodates the cable (6).

10. The lumbar adjuster as claimed in claim 8, **characterized in that** the cable (6) which moves the slides (4, 5) is guided between two frame parts and has a catch (9, 10) for each of the slides (4, 5).

11. The lumbar adjuster as claimed in claims 3 and 8, **characterized in that** the one slide (4) can be moved via a cable (6) coupled to it, and the Bowden tube (7) is supported on the frame (1).

12. The lumbar adjuster as claimed in claim 7, **characterized in that** the frame (1) is of two-part design and each frame part has a bow (2, 3).

13. The lumbar adjuster as claimed in claim 7 or 8, **characterized in that** the frame (1) is manufactured from wire.

14. The lumbar adjuster as claimed in one of the preceding claims, **characterized in that** the slides (4, 5) are designed as cylindrical elements.

15. The lumbar adjuster at least as claimed in claim 2, **characterized in that** the joint (G) is formed by a pin which couples the bows (2, 3).

16. The lumbar adjuster as claimed in claim 15, **characterized in that** the pin reaches through the two bows (2, 3).

17. The lumbar adjuster at least as claimed in claim 2, **characterized in that** the joint (G) is designed as a wire element which connects the two bows (2, 3).

18. The lumbar adjuster at least as claimed in claim 2, **characterized in that** the joint (G) is formed by the two bows (2, 3) being mutually supported on each other.

19. The lumbar adjuster as claimed in claim 17, **characterized in that** the joint (G) is designed in the manner of a rolling cradle-type joint.

20. The lumbar adjuster as claimed in claims 18 and 19, **characterized in that** the joint (G) is formed by specially shaped and embracing regions of the bows (2, 3).

## Revendications

1. Dispositif de réglage lombaire pour un siège de véhicule automobile avec
- un cadre (1) portant le dispositif de réglage lombaire et
- deux étriers (2, 3) pouvant pivoter, se croisant à la manière de ciseaux, au moins un étrier (2, 3) étant associé un patin (4, 5) mobile linéairement pour le pivotement,
**caractérisé en ce**
**qu'**un patin (4, 5) est disposé dans la zone de cisaillement des étriers (2, 3) et en ce que les étriers (2, 3) sont réalisés comme des zones formées du cadre (1) formant le réglage lombaire.

2. Dispositif de réglage lombaire selon la revendication 1, **caractérisé en ce que** les deux étriers (2, 3) sont couplés par une articulation (G).

3. Dispositif de réglage lombaire selon la revendication 1 et 2, **caractérisé en ce qu'**à l'un des étriers (2) est associé un patin (4) s'appuyant sur l'autre étrier (3).

4. Dispositif de réglage lombaire selon la revendication 1 ou 2, **caractérisé en ce qu'**à chacun des étriers (2, 3) est associé un patin (4, 5).

5. Dispositif de réglage lombaire selon l'une quelconque des revendications précédentes, **caractérisé en ce que** le ou les patins (4, 5) peuvent se déplacer par le biais d'un entraînement manuel.

6. Dispositif de réglage lombaire selon l'une quelconque des revendications 1 à 4, **caractérisé en ce que** le ou les patins (4, 5) peuvent se déplacer par le biais d'un entraînement motorisé.

7. Dispositif de réglage lombaire selon la revendication 5 ou 6, **caractérisé en ce que** le ou les patins (4, 5) peuvent se déplacer par le biais d'une vis sans fin (11) pouvant être entraînée.

8. Dispositif de réglage lombaire selon la revendication 5 ou 6, **caractérisé en ce que** le ou les patins (4, 5) peuvent être déplacés par une commande à câble (6, 7).

9. Dispositif de réglage lombaire selon la revendication 8, **caractérisé en ce que** l'un des patins (4, 5) peut être déplacé par un câble articulé (6), l'autre patin (4, 5) par une gaine de câble Bowden (9, 10) recevant le câble (6).

10. Dispositif de réglage lombaire selon la revendication 8, **caractérisé en ce que** le câble (6) déplaçant les patins (4, 5) est guidé entre deux parties de cadre et présente un élément d'entraînement (9, 10) pour chacun des patins (4, 5).

11. Dispositif de réglage lombaire selon les revendications 3 et 8, **caractérisé en ce qu'**un patin (4) peut être déplacé par un câble articulé (6) et la gaine de câble Bowden (7) s'appuie sur le cadre (1).

12. Dispositif de réglage lombaire selon la revendication 7, **caractérisé en ce que** le cadre (1) est réalisé en deux parties et chaque partie de cadre présente un étrier (2, 3).

13. Dispositif de réglage lombaire selon la revendication 7 ou 8, **caractérisé en ce que** le cadre (1) est fabriqué en fil métallique.

14. Dispositif de réglage lombaire selon l'une quelconque des revendications précédentes, **caractérisé en ce que** les patins (4, 5) sont réalisés comme des éléments cylindriques.

15. Dispositif de réglage lombaire au moins selon la revendication 2, **caractérisé en ce que** l'articulation (G) est formée par un axe couplant les étriers (2, 3).

16. Dispositif de réglage lombaire selon la revendication 15, **caractérisé en ce que** l'axe traverse les deux étriers (2, 3).

17. Dispositif de réglage lombaire selon la revendication 2, **caractérisé en ce que** l'articulation (G) est réalisée comme un élément de fil métallique reliant les deux étriers (2, 3).

18. Dispositif de réglage lombaire selon la revendication 2, **caractérisé en ce que** l'articulation (G) est formée par le fait que les deux étriers (2, 3) s'appuient mutuellement l'un sur l'autre.

19. Dispositif de réglage lombaire selon la revendication 17, **caractérisé en ce que** l'articulation (G) est réalisée à la manière d'une articulation à roulement et à bascule.

20. Dispositif de réglage lombaire selon les revendications 18 et 19, **caractérisé en ce que** l'articulation (G) est formée par des zones d'étriers (2, 3) formées spécialement et s'enveloppant.
